Europäisches Patentamt

European Patent Office

Office européen des brevets

(19)

(11) Veröffentlichungsnummer : **0 193 644**
**B1**

(12)

# EUROPÄISCHE PATENTSCHRIFT

(45) Veröffentlichungstag der Patentschrift :
15.06.88

(21) Anmeldenummer : 85114266.1

(22) Anmeldetag : 08.11.85

(51) Int. Cl.⁴ : **F 23 J 15/00**

(54) Gehäuse.

(30) Priorität : 07.03.85 DE 3508020

(43) Veröffentlichungstag der Anmeldung :
10.09.86 Patentblatt 86/37

(45) Bekanntmachung des Hinweises auf die Patenterteilung : 15.06.88 Patentblatt 88/24

(84) Benannte Vertragsstaaten :
AT BE CH DE FR GB IT LI LU NL SE

(56) Entgegenhaltungen :
US-A- 2 985 516
US-A- 4 322 386
PATENT ABSTRACTS OF JAPAN, Band 5, Nr. 71 (C-
54)[743], 13. Mai 1981
PATENT ABSTRACTS OF JAPAN, Band 5, Nr. 75 (C-
55)[747], 19. Mai 1981

(73) Patentinhaber : Deutsche Babcock Werke Aktiengesellschaft
Duisburger Strasse 375
D-4200 Oberhausen 1 (DE)

(72) Erfinder : Wolf, Hubert
Dompfaffweg 1
D-4005 Meerbusch 3 (DE)
Erfinder : Teschke, Hans-J.
Ewaldstrasse 9
D-4200 Oberhausen 11 (DE)
Erfinder : Riese, Wilhelm
Rügenstrasse 41
D-4200 Oberhausen 11 (DE)

(74) Vertreter : Müller, Jürgen, Dipl.-Ing.
Deutsche Babcock AG Lizenz- und Patentabteilung
Duisburger Strasse 375
D-4200 Oberhausen 1 (DE)

## Beschreibung

Die Erfindung betrifft ein Gehäuse mit den Merkmalen des ersten Teils des Anspruches 1.

Derartige, zum Beispiel aus « Jahrbuch der Dampferzeugungstechnik » 5. Ausgabe, 1985/86, Seiten 1102 bis 1103 bekannte Gehäuse werden für Anlagen zur Entstickung von Abgasen eingesetzt, die eine Temperatur von etwa 300 bis 400 °C haben. Die auf den Bühnen aufgestellten Kästen enthalten die für die Umsetzung der in den Abgasen enthaltenen Stickoxide mit Ammoniak notwendigen Katalysatoren. Da die Kästen ein beträchtliches Gewicht aufweisen, sind schwere Tragkonstruktionen zu verwenden, die bei einem aus der Praxis bekannten Gehäuse durch dessen Inneres gespannt sind. Die Vielzahl der Kästen wird dabei durch innerhalb des Gehäuses vorhandene Hebezeuge aufgestellt, was lange Montagezeiten zur Folge hat und einen Zutritt des Montagepersonals in das Gehäuseinnere erfordert.

Eine Abstützung der Katalysatormasse in einem Gerüst, das das Gehäuse frei nach unten dehnen läßt, ist in JP-A-56 21 630 beschrieben.

Der Erfindung liegt die Aufgabe zugrunde, das gattungsgemäße Gehäuse derart auszubilden, daß eine weitgehend ungehinderte Wärmedehnung des Gehäuses bei leichter Tragkonstruktion und verkürzter Montagezeit ermöglicht wird.

Diese Aufgabe wird bei einem gattungsgemäßen Gehäuse durch die kennzeichnenden Merkmale des Anspruches 1 gelöst. Vorteilhafte Ausgestaltungen der Erfindung sind in den Unteransprüchen enthalten.

Bei dem erfindungsgemäßen Gehäuse können die Träger leicht gebaut werden, da das Gewicht jeder Bühne einzeln durch die Zugstangen abgefangen wird. Die Aufhängung der Zugstangen in dem Gerüst macht eine Verbindung der Bühnen mit dem Gerüst entbehrlich, so daß sich das Gehäuse frei und bevorzugt nach unten dehnen kann. Die kreuzweise angeordneten Träger ergeben eine Horizontalaussteifung des Gehäuses und des Gehäusewände. Die Gehäusewände bedürfen daher nur einer zusätzlichen innen liegenden Aussteifung durch kleine Aussteifungsprofile, die eine Wärmedehnung nur im geringen Maße behindern. Die Bühnenkonstruktion ermöglicht ein Einschieben der Kästen durch eine seitliche Zugangsöffnung, wodurch die Montagezeit verkürzt werden kann.

Ein Ausführungsbeispiel der Erfindung ist in der Zeichnung dargestellt und wird im folgenden näher erläutert. Es zeigen :

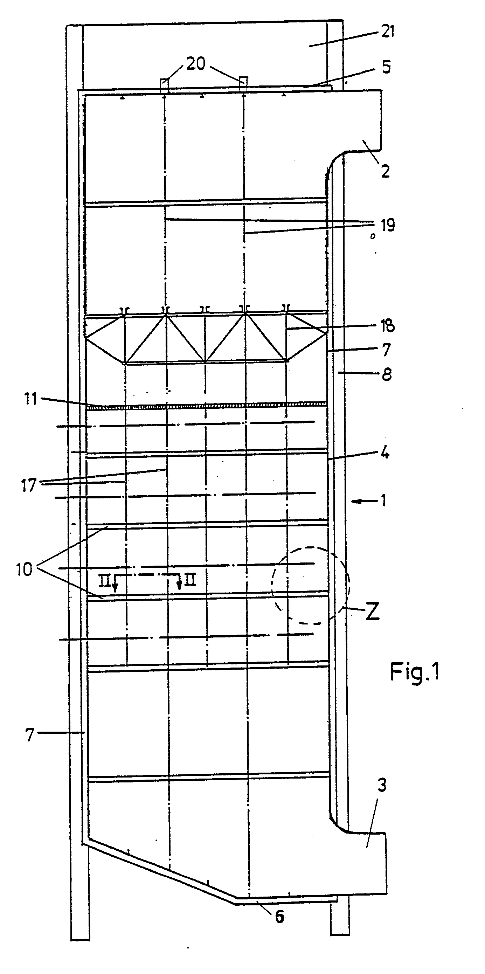

Fig. 1 schematisch im Längsschnitt ein Gehäuse gemäß der Erfindung,

Fig. 2 im vergrößerten Maßstab den Schnitt II-II nach Fig. 1,

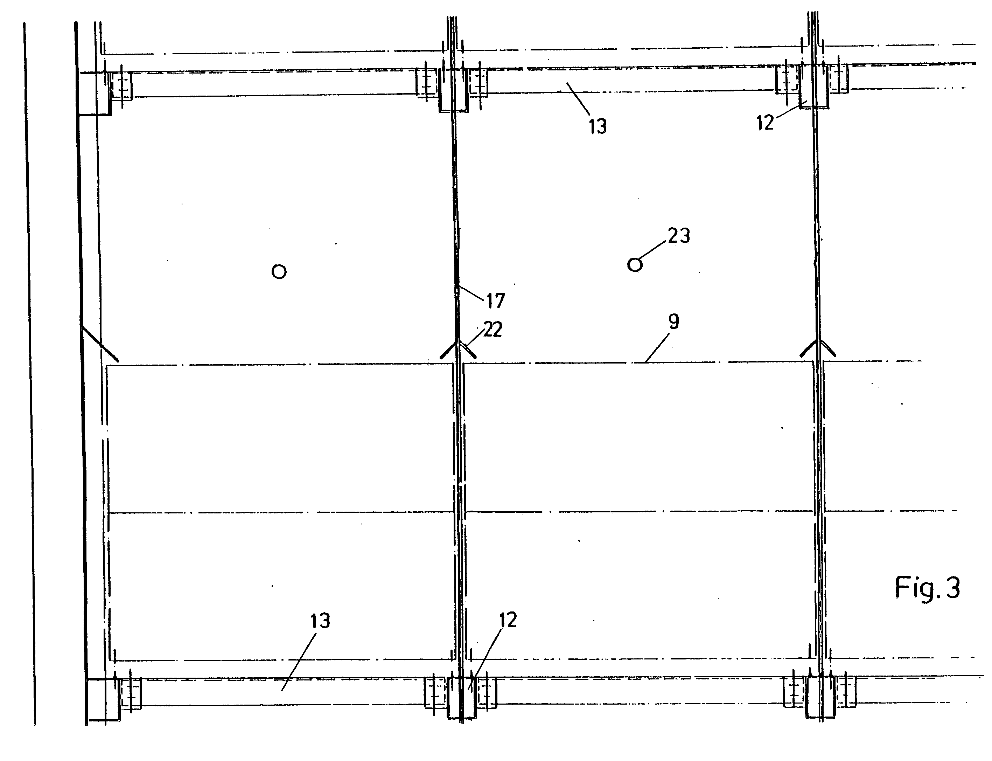

Fig. 3 den Schnitt III-III nach Fig. 2 und

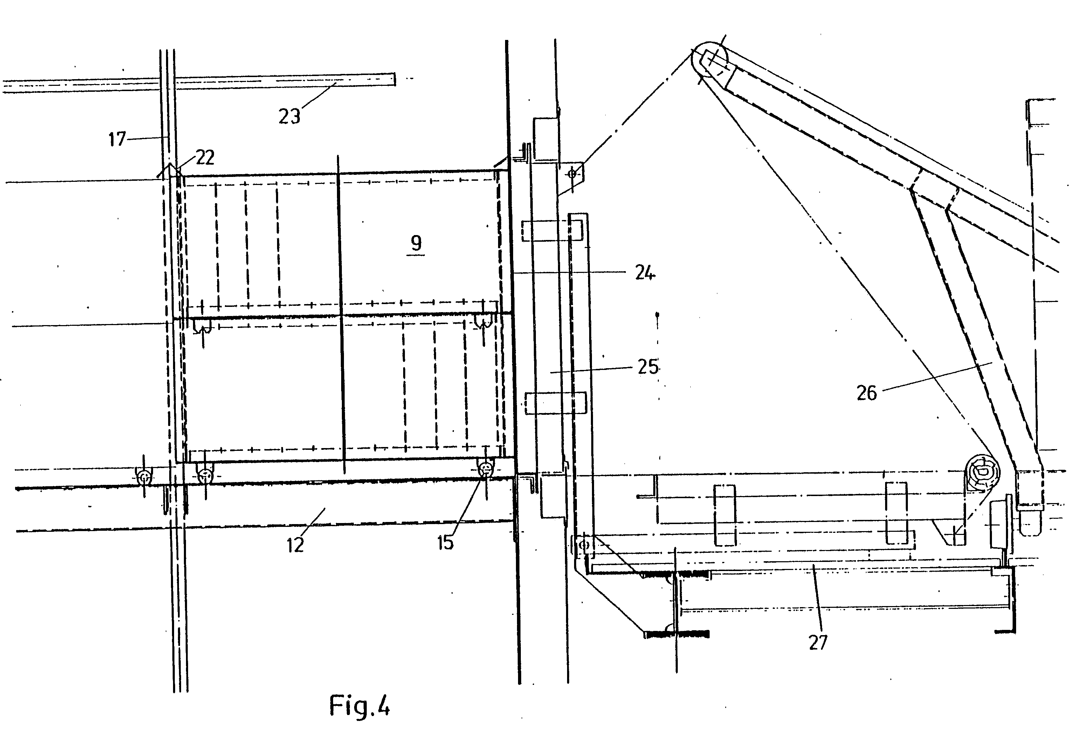

Fig. 4 die Einzelheit Z nach Fig. 1.

In einem Gehäuse 1 sind Katalysatoren untergebracht, die eine Entstickung von Rauchgas bewirken. Für die Durchströmung des zu behandelnden, 300 bis 400 °C warmen Rauchgases ist in dem oberen Teil des Gehäuses 1 ein Zuführungskanal 2 und im unteren Teil ein Austrittskanal 3 vorgesehen. Die Kanäle 2, 3 sind an die geschlossene Wandung des Gehäuses 1 angeschlossen, die aus Seitenwänden 4, einer Decke 5 und einem Boden 6 besteht. Die Wandung ist außen mit einer Isolierung 7 verkleidet. Das Gehäuse 1 ist außen von einem Gerüst 8 umgeben.

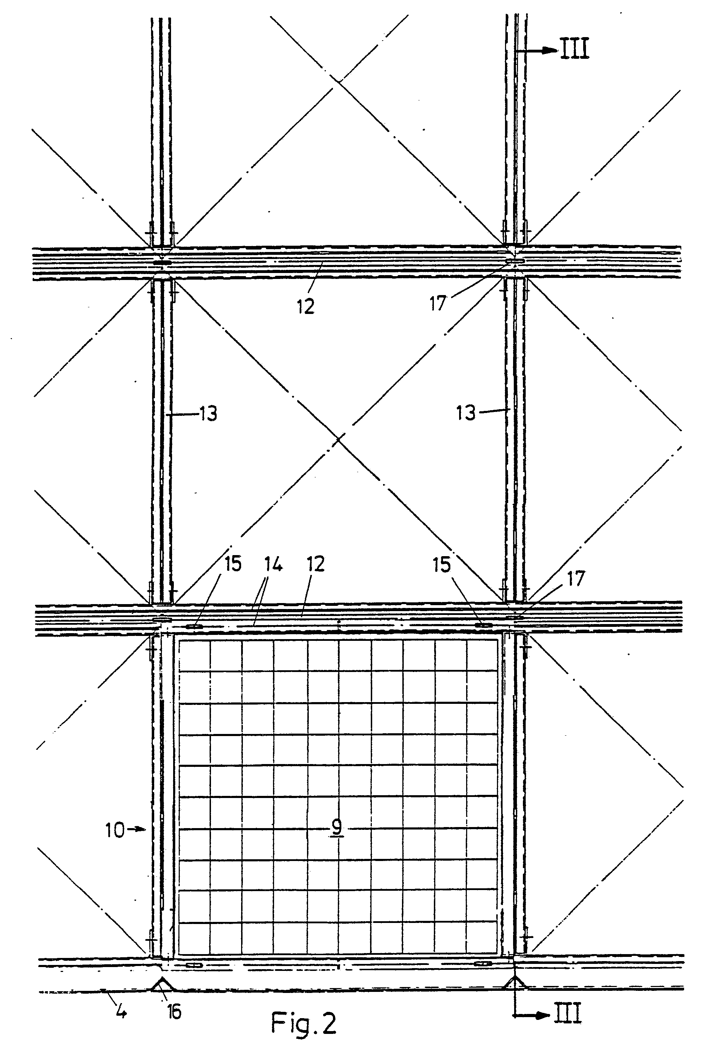

Die Katalysatoren sind in dem von oben nach unten gerichteten Strömungsweg des Rauchgases vorgesehen. An ihnen findet die Umsetzung zwischen den im Rauchgas vorhandenen Stickoxiden und dem in das Rauchgas eingeblasenen Ammoniak statt. Die Katalysatoren sind auf eine metallische oder keramische Trägermasse aufgebracht. Im vorliegenden Fall sind keramische Werkstoffe verwendet, die zu Steinen mit vertikalen Durchströmungsöffnungen verarbeitet sind. Die Katalysatormasse ist in Kästen 9 untergebracht, die mit einem Stahlrahmen versehen sind. Diese Kästen 9 ruhen auf Bühnen 10 auf, die in dem Gehäuse 1 in übereinanderliegenden Ebenen untergebracht sind. In der Fig. 2 ist der Übersicht halber nur ein einziger solcher Kästen 9 gezeigt. Selbstverständlich ist die gesamte Bühne 10 mit derartigen Kästen 9 vollgestellt. Oberhalb der oberen Bühne 10 ist ein Gitterwerk 11 als Strömungsgleichrichter vorgesehen.

Die Bühnen 10 bestehen aus durchgehenden, längs angeordneten Trägern 12, die ein torsionssteifes Kastenprofil aufweisen. Der Mittenabstand der Träger 12 entspricht der Breite der Kästen 9. Die Träger 12 haben die Aufgabe, die Lasten der Kästen 9 aufzunehmen. In Querrichtung sind die Träger 12 durch Zwischenträger 13 verbunden. Die Zwischenträger 13 dienen zur Horizontalaussteifung und zur Übertragung von außermittigen Lasten. Der Mittenabstand der Zwischenträger 13 entspricht der Länge der Kästen 9.

Auf den Trägern 12 sind Schienen 14 befestigt, auf denen die Kästen 9 aufliegen und über die die Kästen 9 verschoben werden können. Vorzugsweise sind die Kästen 9 mit Rollen 15 versehen, die auf den Schienen 14 abrollen.

Die Seitenwände 4 des Gehäuses 1 sind mit den Trägern 12 und den Zwischenträgern 13 verbunden. Auf diese Weise sind die Außenwände 4 ausgesteift, so daß auf außenliegende Bandagen verzichtet werden kann. Zur zusätzlichen Aussteifung sind auf der Innenseite der Seitenwände 4 kleine Aussteifungsprofile 16 angebracht. Auf diese Weise werden in der Wandung ungleiche Wärmedehnungen verhindert und Spannungsspitzen vermieden. Ähnliche Aussteifungsprofile sind auf der Innenwand der das Rauchgas führenden Kanäle 2, 3 vorgesehen.

Die Bühnen 10 sind an Zugstangen 17 aufgehängt. Die Befestigung der Zugstangen 17 an den Trägern 12 erfolgt stets an Kreuzungspunkten der Träger 12 mit den Zwischenträgern 13. Damit ist der Abstand der Zugstangen 17 voneinander gleich der Größe der Kästen 9 oder einem ganzzahligen Mehrfachen der Kastengröße. Die Zugstangen 17 sind nach oben geführt und an einem Fachwerkbinder 18 aufgehängt. Der Fachwerkbinder 18 ist wiederum an Zugbändern 19 aufgehängt, die durch die Decke 5 des Gehäuses 1 hindurchgeführt und über höhenverstellbare Gelenkstücke 20 an der Decke 21 des Gerüstes 8 befestigt sind. Abweichend von dieser Ausführungsform können die Zugstangen 17 auch durch die Decke 5 des Gehäuses 1 hindurchgeführt und direkt an der Decke 21 des Gerüstes 8 aufgehängt sein. Durch diese innenliegende Tragkonstruktion und die Aufhängung des Gehäuses 1 an der Gerüstdecke 21 kann auf eine direkte Verbindung der Bühnen 10 mit dem Gerüst 8 verzichtet werden, so daß eine ungehinderte Wärmedehnung des Gehäuses 1 zugelassen ist, die nach unten gerichtet ist.

Mit den Zugstangen 17 sind auch die oberhalb der Kästen 9 notwendigen Einbauten befestigt. Diese Einbauten sind einmal Abweisbleche 22, die oberhalb der Kanten vorzusehen sind, an denen zwei benachbarte Kästen 9 im eingesetzten Zustand aneinanderstoßen. Diese Abweichbleche 22 lenken das Rauchgas in die Kästen 9 und verhindern so eine unerwünschte Bypassströmung zwischen den Kästen 9. Weitere Einbauten sind Rußbläser 23, durch die ein gas- oder dampfförmiges Medium durch die Durchtrittskanäle in der Katalysatormasse geblasen wird, um Staubablagerungen zu entfernen. Die Rußbläser 23 sind über Halterungen an den Zugstangen 17 befestigt.

In einer der Seitenwände 4 ist in Höhe jeder Bühne 10 eine Zugangsöffnung 24 vorgesehen, die sich über die gesamte Länge der Seitenwand 4 erstreckt. Die Höhe der Zugangsöffnung 24 ist etwas größer als die Höhe der Kästen 9, wobei die Unterkante der Zugangsöffnung 24 in Höhe der Träger 12 liegt. Die Zugangsöffnung 24 ist durch eine schwenkbare Klappe 25 verschließbar. Zum Öffnen der Klappe 25 dient ein mit einer Winde ausgerüsteter Wagen 26, der auf einer auf dem Gerüst 8 angebrachten Plattform 27 verfahrbar ist. Die Kästen 9 werden nacheinander auf die Plattform 27 gebracht und durch die Zugangsöffnung 24 auf die entsprechende Bühne 10 innerhalb des Gehäuses 1 gefahren. Von dort werden sie während der Montage in das Gehäuse 1 eingeschoben. Vorzugsweise sind die Bühnen 10 unter einem Gefälle angeordnet, so daß die mit Rollen 15 versehenen Kästen 9 aus eigener Kraft in das Gehäuse 1 eingebracht werden können. Bei der Demontage werden die Kästen mit Hilfe einer Winde durch die Zugangsöffnung 24 herausgezogen.

## Patentansprüche

1. Gehäuse, das eine äußere Wandung, an die ein Zuführungskanal (2) und ein Austrittskanal (3) für die Durchströmung eines warmen Gases angeschlossen sind, und mehrere aus Trägern (12) gebildete Bühnen aufweist, die in mehreren Ebenen übereinander angeordnet sind, auf denen von dem Gas durchströmte Kästen (9) aufgestellt sind, dadurch gekennzeichnet, daß die Träger (12) über in Querrichtung angeordnete Zwischenträger (13) verbunden sind, daß der Mittenabstand der Träger (12) und der Zwischenträger (13) den Querschnittsabmessungen der Kästen (9) entspricht, daß an Kreuzungspunkten der Träger (12) mit den Zwischenträgern (13) Zugstangen (17) befestigt sind, daß alle Bühnen (10) an den Zugstangen (17) aufgehängt sind und daß die Zugstangen (17) an einem das Gehäuse (1) umgebenden Gerüst (8) aufgehängt sind.

2. Gehäuse nach Anspruch 1, dadurch gekennzeichnet, daß die die Bühnen (10) tragenden Zugstangen (17) an einem Fachwerkbinder (18) befestigt sind und daß der Fachwerkbinder (18) an dem Gerüst (8) aufgehängt ist.

3. Gehäuse nach Anspruch 1 oder 2, dadurch gekennzeichnet, daß die Wandung des Gehäuses (1) an den Trägern (12) und den Zwischenträgern (13) abgestützt und auf der dem Gehäuseinneren zugewandten Seite mit Aussteifungen versehen ist.

4. Gehäuse nach einem oder mehreren der Ansprüche 1 bis 3, dadurch gekennzeichnet, daß in dem Raum oberhalb der Oberkante der Kästen (9) und der nächst höheren Bühne (10) Einbauten vorgesehen sind und daß die Einbauten an den Zugstangen (17) befestigt sind.

5. Gehäuse nach einem oder mehreren der Ansprüche 1 bis 4, dadurch gekennzeichnet, daß in der Höhe jeder Bühne (10) in einer der Seitenwände (4) des Gehäuses (1) eine Zugangsöffnung (24) vorgesehen ist, deren Höhe mindestens der Höhe der Kästen (9) entspricht und die durch eine schwenkbare Klappe (25) verschlossen ist.

6. Gehäuse nach einem oder mehreren der Ansprüche 1 bis 5, dadurch gekennzeichnet, daß die längs angeordneten Träger (12) durchgehend ausgebildet sind, ein torsionssteifes Profil aufweisen und Schienen (14) aufnehmen, auf denen die Kästen (9) aufliegen und verfahrbar sind.

7. Gehäuse nach Anspruch 6, dadurch gekennzeichnet, daß die Kästen (9) mit Rollen (15) versehen sind.

## Claims

1. Housing which displays an outer wall, to which a feed channel (2) and an exit channel (3) for the throughflow of a warm gas are connected, and several platforms, which are formed of carriers (12) and arranged one above the other in several planes and on which boxes (9) flowed through by the gas are set up, characterised thereby, that the carriers (12) are connected through intermediate carriers (13) arranged in transverse direction, that the pitch spacing of the carriers (12) and of the intermediate carriers (13) corresponds to the cross-sectional dimensions of the boxes (9), that tie rods (17) are fastened at crossing points of the carriers (12) with the intermediate carriers (13), that all platforms (10) are suspended at the tie rods (17) and that the tie rods are suspended at a framework (8) surrounding the housing (1).

2. Housing according to claim 1, characterised thereby, that the tie rods (17) carrying the platforms (10) are fastened at a latticework frame (18) and that the latticework frame (18) is suspended at the framework (8).

3. Housing according to claim 1 or 2, characterised thereby, that the wall of the housing (1) is supported at the carriers (12) and the intermediate carriers (13) and provided with stiffeners at the side facing the interior of the housing.

4. Housing according to one or more of the claims 1 to 3, characterised thereby, that components are provided in the space above the upper edge of the boxes (9) and the next higher platform (10) and that the components are fastened at the tie rods (17).

5. Housing according to one or more of the claims 1 to 4, characterised thereby, that an access opening (24), the height of which corresponds to at least the height of the boxes (9) and which is closed by a pivotable flap (25), is provided in one of the side walls (4) of the housing (1) at the level of each platform (10).

6. Housing according to one or more of the claims 1 to 5, characterised thereby, that the longitudinally arranged carriers (12) are constructed to be continuous, display a torsionally stiff profile and receive rails (14), on which the boxes (9) lie and are movable.

7. Housing according to claim 6, characterised thereby, that the boxes (9) are provided with rollers (15).

## Revendications

1. Carter présentant une enveloppe extérieure, à laquelle se raccordent un conduit d'arrivée (2) et un conduit de sortie (3) pour le transit d'un gaz à haute température, ainsi que plusieurs plates-formes constituées de poutrelles (12), disposées les unes au-dessus des autres à différents niveaux et sur lesquelles sont installés des caissons (9) traversés par le gaz, caractérisé en ce que les poutrelles (12) sont raccordées par des entretoises (13) disposées transversalement, que l'entr'axe des poutrelles (12) et celui des traverses (13) correspondent aux dimensions de la section des caissons (9), qu'aux points de croisement des poutrelles (12) et des entretoises (13), sont fixées des barres de traction (17), que toutes les plates-formes (10) sont suspendues aux barres de traction (17) et que celles-ci sont à leur tour suspendues à une ossature (8) entourant le carter (1).

2. Carter selon la revendication 1, caractérisé en ce que les barres de traction (17) supportant les plates-formes (10) sont fixées à une poutrelle de commande de déplacement (18) et que la poutrelle de commande de déplacement (18) est suspendue à l'ossature (8).

3. Carter selon la revendication 1 ou 2, caractérisé en ce que l'enveloppe du carter (1) prend appui sur les poutrelles (12) et sur les entretoises (13) et qu'elle est dotée de dispositifs de renforcement du côté faisant face à l'intérieur du carter.

4. Carter selon l'une ou plusieurs des revendications 1 à 3, caractérisé en ce que dans l'espace situé au-dessus du bord supérieur des caissons (9) et de la plus proche plate-forme (10) supérieure, sont prévus des équipements et que ces équipements sont fixés aux barres de traction (17).

5. Carter selon l'une ou plusieurs des revendications 1 à 4, caractérisé en ce qu'au niveau de chaque plate-forme (10), une ouverture d'accès (24) est prévue dans l'une des cloisons latérales (4) du carter (1), ouverture dont la hauteur est au moins égale à celle des caissons (9) et qui se ferme par une trappe articulée (25).

6. Carter selon l'une ou plusieurs des revendications 1 à 5, caractérisé en ce que les poutrelles (12) disposées en longueur sont continues, présentent un profil anti-torsion et supportent des rails (14) sur lesquels les caissons (9) sont en appui et peuvent se déplacer.

7. Carter selon la revendication 6, caractérisé en ce que les caissons (9) sont équipés de galets de roulement (15).

Fig.1

Fig.2

Fig. 3

0 193 644

Fig.4